**Europäisches Patentamt**

**European Patent Office**

**Office européen des brevets**

(11) Veröffentlichungsnummer: **0 406 470 A1**

## (12) EUROPÄISCHE PATENTANMELDUNG

(21) Anmeldenummer: 89112447.1

(22) Anmeldetag: 07.07.89

(51) Int. Cl.5: **H02K 49/04**

(43) Veröffentlichungstag der Anmeldung:
**09.01.91 Patentblatt 91/02**

(84) Benannte Vertragsstaaten:
**AT BE CH DE ES FR GB GR IT LI LU NL SE**

(71) Anmelder: **Berger, Johann**
**Innsbrucker Strasse 43**
**A-6300 Wörgl(AT)**

(72) Erfinder: **Berger, Johann**
**Innsbrucker Strasse 43**
**A-6300 Wörgl(AT)**

(74) Vertreter: **Torggler, Paul, Dr. et al**
**Wilhelm-Greil-Strasse 16**
**A-6020 Innsbruck(AT)**

(54) **Stator für eine Wirbelstrombremse.**

(57) Der Magnetspulenträger (1) eines Stators für eine Wirbelstrombremse weist zwei voneinander distanzierte Tragringe (3) auf, in denen paarweise fluchtende Aufnahmeöffnungen (4,5) vorgesehen sind. Die im Träger (1) gehaltenen Magnetspulen (6), denen stirnseitig ein auf der Bremswelle (12) befestigter Rotor (13) zugeordnet ist, sind auf beidseitig vorstehenden Kernen (7) angeordnet. Die wicklungsfreien, vorstehenden Endbereiche (8) der Kerne (7) sind jeweils in eine Aufnahmeöffnung (4,5) eines Trangringes (3) eingesetzt.

Fig. 1

Die Erfindung betrifft einen Stator für eine Wirbelstrombremse, insbesondere zum Einbau in die Antriebswelle eines Kraftfahrzeuges, mit einem Magnetspulenträger, der zwei voneinander distanzierte Tragringe aufweist, und mit am Träger gehaltenen Magnetspulen, denen stirnseitig ein auf der Bremswelle befestigter Rotor zugeordnet ist.

Insbesondere für Schwerfahrzeuge stellt eine Wirbelstrombremse eine wirkungsvolle, unabhängige Ergänzung des übrigen Bremssystems dar, und wird, angebaut an das Schaltgetriebe oder als Teil der Kardanwelle, in den Antrieb eingesetzt. Werden die Magnetspulen des Stators erregt, so bauen sie Magnetfelder auf, die in dem sich drehenden Rotor Wirbelströme induzieren. Die wiederum von den Wirbelströmen aufgebauten Magnetfelder wirken mit denen der Magnetspulen zusammen, und bremsen den Rotor und damit die Antriebswelle

Eine Wirbelstrombremse mit einem Stator der eingangs genannten Art ist beispielsweise der FR-A-1 061 702 zu entnehmen. An den beiden Tragringen ist je ein Kranz von Magnetspulen angeschraubt, die von beiden Seiten an den mittig angeordneten Rotor angeordnet sind. An den Kernen der Magnetspulen sind rotorseitig die Wicklung axial festlegende Polschuhe vorgesehen. Die beiden Tragringe sind durch eine äußere Manschette distanziert und über Speichen mit einer die Bremswelle lagernden Nabe verbunden.

Aus der DE-B-1 538 899 ist eine Wirbelstrombremse bekannt, deren Stator zum Anschluß an das Getriebegehäuse eines Kraftfahrzeuges geeignet ist. Der Stator weist einen Tragring mit einem Kranz von Aufnahmeöffnungen auf, und die Kerne der Magnetspulen durchdringen Öffnungen im Tragring, an denen sie durch äußere Polschuhe fixiert sind. An der zweiten Stirnseite ist ebenfalls jeweils ein die Wicklung haltender Polschuh vorgesehen. Der auf der zu bremsenden Welle vorgesehene Rotor umfaßt zwei Scheiben, die jeweils den Polschuhen an einer Stirnseite zugeordnet sind.

Die FR-A-2 044 114 zeigt eine Wirbelstrombremse, deren mit zwei Kränzen von Magnetspulen versehener Stator auf einer Gehäusenabe angeordnet ist, die die zu bremsende Welle lagert. Die Magnetspulen stehen nach entgegengesetzten Seiten von zwei mit der Gehäusenabe verschraubten Tragringen ab, und ihren stirnseitigen Polschuhen sind zwei voneinander distanzierte Scheiben des Rotors zugeordnet.

In der Anordnung ähnlich ist die in der EP-B-260 253 gezeigte Wirbelstrombremse, bei der auf einer Gehäusenabe ein Tragring mit Aufnahmeöffnungen vorgesehen ist. Jede Öffnung wird von einem mit einem annähernd mittigen Flansch versehenen Kern durchdrungen, wobei auf beiden Seiten des Tragringes eine Wicklung durch einen abschließenden Polschuh gehalten ist.

Die Erfindung hat es sich nun zur Aufgabe gestellt, einen zwischen einem zweischeibigen Rotor anordenbaren Stator zu schaffen, dessen Magnetspulen keiner Polschuhe bedürfen, sodaß eine kürzestmögliche axiale Länge erzielbar ist.

Erfindungsgemäß wird dies dadurch erreicht, daß in den beiden Tragringen paarweise fluchtende Aufnahmeöffnungen vorgesehen sind und daß die Magnetspulen auf beidseitig vorstehenden Kernen angeordnet sind, deren wicklungsfreie Endbereiche jeweils in eine Aufnahmeöffnung eines Tragringes eingesetzt sind.

Im Magnetspulenträger liegen somit die beiden Endbereiche jedes Kernes in Aufnahmeöffnungen der Tragringe, zwischen denen sich die Magnetspule erstreckt. Die Tragringe bilden damit nicht nur den Kernhalter, sondern stellen auch axiale Anschläge für die Magnetspule dar, sodaß über dem Kern radial vorstehende Polschuhe erübrigt werden. Die Befestigung der wicklungsfreien Endabschnitte der Kerne in den Aufnahmeöffnungen kann in jeder beliebigen Weise erfolgen, die das Herausfallen der Kerne vermeidet. Beispielsweise können die Endabschnitte und die Aufnahmeöffnungen geringfügig konisch ausgebildet sein, kann an der Aufnahmeöffnung außen- bzw. rotorseitig eine Anlageringschulter vorgesehen sein usw. Eine bevorzugte Ausführung für die Befestigung der Kerne sieht vor, daß einer der beiden Endbereiche jedes Kernes mit einem Gewinde versehen und in eine gewindetragende Aufnahmeöffnung eingeschraubt ist. Damit ist der feste Halt jedes Kernes gesichert, dessen anderer Endbereich in der Aufnahmeöffnung des weiteren Tragringes lose eingesetzt ist. Der Einbau der Magnetspulen in den Träger ist im Prinzip auch bei einer einstückigen Ausbildung möglich, insbesondere wenn ein Endabschnitt mit einem Gewinde versehen ist. Die Herstellung des Stators wird aber wesentlich vereinfacht, wenn die beiden Tragringe an einander zu einer Umhüllung ergänzten Käfigschalen vorgesehen sind.

Axial an die Magnetspule anschließend kann weiters auf jedem Endbereich jedes Kernes ein Ring aus elastischem Material vorgesehen sein, der am Tragring anliegt. Die Endabschnitte der Kerne stehen bevorzugt geringfügig außenseitig aus der Aufnahmeöffnung vor, um den Rotor möglichst angenähert positionieren zu können. Der Überstand entspricht dabei etwa der Spaltbreite zum Rotor.

Der Magnetspulenträger kann dabei einerseits auf einer Lagernabe der Bremswelle befestigt sein, wobei bei zweiteiligem Träger die Verbindungsschraube der beiden Teile auch zur Fixierung an der Lagernabe verwendet werden können, andererseits ist aber auch eine Befestigung an einem Getriebegehäuse oder dergleichen mittels äußerer Befestigungsmittel denkbar.

Nachstehend wird nun die Erfindung an Hand der Figuren der beiliegenden Zeichnung näher beschrieben, ohne darauf beschränkt zu sein.

Es zeigen:

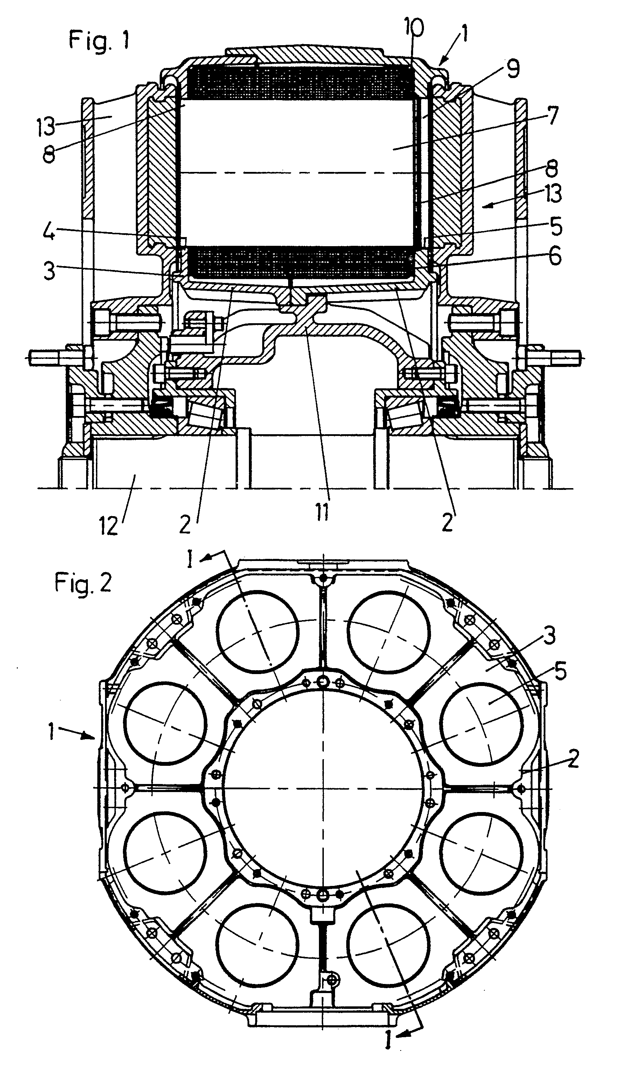

Fig. 1 einen Axialschnitt durch eine Wirbelstrombremse mit erfindungsgemäßem Stator gemäß der Linie I-I in Fig. 2, und

Fig. 2 eine Innenansicht einer Käfigschale des Magnetspulenträgers. Eine Wirbelstrombremse weist gemäß Fig. 1 einen Stator mit einem ringförmigen Magnetspulenträger 1 auf, der auf einer Lagernabe 11 angeordnet ist. Diese lagert eine Bremswelle 12, auf der ein aus zwei Scheiben bestehender Rotor 13 befestigt ist. Die beiden Rotorscheiben sind bis auf einen geringen Spalt an die Stirnseiten der Kerne 7 der Magnetspulen 6 angenähert, sodaß deren Magnetfelder im Rotor Wirbelströme indizieren, deren Magnetfelder mit denen der Magnetspulen zusammenwirken und den Rotor bremsen.

Der Magnetspulenträger 1 umfaßt zwei Käfigschalen 2, die zu einem die Magnetspulen aufnehmenden Käfig mittels nicht gezeigter Schrauben verbunden sind, die in die in Fig. 2 gezeigten inneren und äußeren Befestigungslöcher eingesetzt werden. Jede Käfigschale 2 weist einen Tragring 3 auf, in dem Aufnahmeöffnungen 4,5 vorgesehen sind, wobei die Aufnahmeöffnungen 5 ein Innengewinde tragen. Die Magnetspulen 6 sind auf Kernen 7 angeordnet, die beidseitig überstehende Endbereiche 8 aufweisen. Einer der beiden Endbereiche 8 jedes Kernes 7 ist mit einem Außengewinde 9 versehen, und in eine Aufnahmeöffnung 5 eingeschraubt, und der zweite Endbereich 8 in eine Aufnahmeöffnung 4 des axial gegenüberliegenden Tragringes 3 eingesteckt. Die Endbereiche 8 fluchten mit den Außenseiten der Tragringe 3, bzw. stehen minimal vor, um einen ausreichend kleinen Spalt zu den Scheiben des Rotors 13 zu gewährleisten Zwischen der Innenseite jedes Tragringes 3 und der Magnetspule 6 ist ein Ring 10 aus elastischem, gegebenenfalls auch isolierendem Material auf den Endbereich 8 des Kernes 7 aufgeschoben.

sind, deren wicklungsfreie Endbereiche (8) jeweils in eine Aufnahmeöffnung (4,5) eines Tragringes (3) eingesetzt sind.

2. Stator nach Anspruch 1, dadurch gekennzeichnet, daß einer der beiden Endbereiche (8) jedes Kernes (7) mit einem Gewinde (9) versehen und in eine gewindetragende Aufnahmeöffnung (5) eingeschraubt ist.

3. Stator nach Anspruch 1 oder 2, dadurch gekennzeichnet, daß die beiden Tragringe (3) an einander zu einer Umhüllung ergänzten Käfigschalen (2) vorgesehen sind.

4. Stator nach einem der Ansprüche 1 bis 3, dadurch gekennzeichnet, daß auf den beiden Endbereichen (8) jedes Kernes (7) ein an den Magnetspulen (6) anliegender Ring (10) aus elastischem Material vorgesehen ist.

**Ansprüche**

1. Stator für eine Wirbelstrombremse, insbesondere zum Einbau in die Antriebswelle eines Kraftfahrzeuges, mit einem Magnetspulenträger (1), der zwei voneinander distanzierte Tragringe (3) aufweist, und mit am Träger (1) gehaltenen Magnetspulen (6), denen stirnseitig ein auf der Bremswelle (12) befestigter Rotor (13) zugeordnet ist, dadurch gekennzeichnet, daß in den beiden Tragringen (3) paarweise fluchtende Aufnahmeöffnungen (4,5) vorgesehen sind, und daß die Magnetspulen (6) auf beidseitig vorstehenden Kernen (7) angeordnet

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-1018527 (TELMA) <br> * Spalte 3, Zeile 1 - Spalte 4, Zeile 61; Figuren 1-3. * | 1. | H02K49/04 |
| Y | | 2, 4. | |
| Y | FR-E-65242 (ELECTRO-MECANIQUE DE L'AVEYRON) <br> * Seite 2, rechte Spalte, Zeilen 24 - 28; Figur 1. * | 2. | |
| Y | FR-A-2097545 (FERODO) <br> * Seite 3, Zeile 39 - Seite 4, Zeile 2; Figur 1. * | 4. | |
| X | FR-A-2164053 (LABAVIA-S.G.E.) <br> * Seite 2, Zeile 16 - Seite 5, Zeile 40; Figuren 1-4. * | 1, 3. | |
| Y | FR-A-1499231 (LABAVIA-S.G.E.) <br> * Seite 2, rechte Spalte, Zeilen 21 - 40; Figuren 1-5. * | 1, 3. | RECHERCHIERTE SACHGEBIETE (Int. Cl.5) |
| Y | FR-A-2421752 (MOTEURS LEROY-SOMER) <br> * Seite 3, Zeile 27 - Seite 6, Zeile 23; Figuren 1-7. * | 1, 3. | H02K |

Der vorliegende Recherchenbericht wurde für alle Patentansprüche erstellt

| Recherchenort | Abschlußdatum der Recherche | Prüfer |
|---|---|---|
| DEN HAAG | 31 JANUAR 1990 | TIO K.H. |